# EUROPEAN PATENT SPECIFICATION

(11) **EP 0 414 961 B1**
(45) Date of publication and mention of the grant of the patent: **08.03.1995**
(21) Application number: 89122334.9
(22) Date of filing: 04.12.1989
(51) Int. Cl.: D01B 3/00, D01B 3/02

(54) **Apparatus for detecting extraneous matter in raw cotton**
Vorrichtung zur Ermittlung von Fremdteilen in Rohbaumwolle
Appareil pour détecter des corps étrangers dans du coton brut

(30) Priority: 28.08.1989 JP 222168/89
(43) Date of publication of application: 06.03.1991
(73) Proprietor: TATSUMI AIR ENGINEERING CO., LTD., Osaka-shi Osaka (JP)
(72) Inventor: Noda, Yasuhiro, Higashi-Osaka-Shi Osaka (JP)
(74) Representative: TER MEER STEINMEISTER & PARTNER GbR

(56) References cited:
- EP-A- 0 000 033
- EP-A- 0 285 602
- PATENT ABSTRACTS OF JAPAN vol. 12, no. 421 (C-541)(3268)8 November 1988 & JP-A-63 152 419 ( TATSUMI EYAA ENG K.K. ) 24 June 1988
- PATENT ABSTRACTS OF JAPAN vol. 12, no. 421 (C-541)(3268)
- 8 November 1988 & JP-A-63 152 418 ( TATSUMI EYAA ENG K.K. ) 24 June 1988
- PATENT ABSTRACTS OF JAPAN vol. 10, no. 280 (C-374)(2336)24 September 1986 & JP-A-61 102 418 ( ITOCHU SHOJI K.K. ) 21 May 1986

## Description

The present invention relates to an apparatus for detecting extraneous matter in raw cotton according to the preamble of claim 1.

If raw cotton contains fragments of fabric, colored cotton fibers, seeds or other extraneous matter, the product prepared from the cotton becomes a reject. Accordingly, there arises a need to detect such extraneous matter.

The conventional detecting apparatus for this purpose include the one disclosed in Unexamined Japanese Patent Publication SHO 61-102418 and adapted to detect extraneous matter from the difference between raw cotton and the extraneous matter in color. The disclosed apparatus comprises a belt conveyor for transporting raw cotton in the form of a strip, and a sensor for detecting extraneous matter which is different in color from the raw cotton. The sensor is disposed above the raw cotton to be transported by the belt conveyor for detecting the extraneous matter different from the raw cotton in color.

With the conventional apparatus described above, raw cotton is moved at all times by the belt conveyor, which is driven at a high speed in order to obtain at least a specified quantity of product per unit time in view of cost. However, the precision of the sensor becomes lower when the raw cotton is moved at a higher speed. Accordingly, it appears useful to transport the raw cotton with an increased thickness and drive the belt conveyor at a reduced speed. Nevertheless, extraneous matter will then become enclosed in the cotton layer of increased thickness and become undetectable by the sensor. Thus, the conventional apparatus is unable to reliably detect extraneous matter in row cotton.

An apparatus of the type mentioned at the beginning is disclosed by JP-A-63-152419. In this known apparatus, the shut-off valve disposed at the outlet of the passage comprises a flap which is hinged to a shaft which is driven in such a manner that said flap swivels about the axis of the shaft. Thus, to continually open and close the outlet of the passage, the flap pivotally reciprocates in two opposite directions between the closing position and the opening position. This continous reciprocation of the direction requires a complicated drive mechanism. Moreover, in case of high frequencies of opening and closing the outlet of the passage to achieve a short detection time, vibrations occur and the shut-off valve is likely to be damaged.

It is therefore an object of the present invention to provide an apparatus for detecting extraneous matter in raw cotton of the above type in which vibration are diminished and the damage of the shut-off valve is precluded.

This object is achieved by an apparatus according to claim 1.

Advantageous embodiments are described in the subclaims.

Preferably, at least one pair of sensors 34 is provided on opposite sides of the passage 35.

The device of the invention may further comprise a sensor for detecting extraneous matter in the raw cotton based on the characteristics of the extraneous matter other than the color thereof.

Preferably, a pair of ducts 49, 50 is provided in communication with the outlet of the passage 35, the duct 49 being in communication with the inlet of the passage 35, the other duct 50 communicating with means for the subsequent raw cotton treating process. The shutoff valve 33 holds the duct 49 out of communication with the outlet of the passage 35 and the other duct 50 and permits the outlet of the passage 35 to communicate with the other duct 50 while opening the outlet of the passage 35. The shutoff valve 33 permits the duct 49 to communicate with the other duct 50 while closing the outlet of the passage 35.

With the apparatus of the present invention, raw cotton is transported upward through the passage 35 by an air stream. When the outlet of the passage 35 is closed with the shutoff valve 33 during the transport of raw cotton, the air stream stops, so that the cotton is also instantaneously stopped while moving through the passage 35. When the outlet of the passage 35 is subsequently opened by the valve 33, the air stream flows to move the cotton also. When the passage outlet is closed again with the valve 33, the raw cotton is also stopped instantaneously. Acccordingly, the raw cotton is intermittently transported upward by the air stream when the outlet of the passage 35 is continually opened and closed by the shutoff valve 33.

When the cotton is instantaneously stopped at an intermediate portion of the passage 35, extraneous matter in the cotton is detected by the sensor 34 through the colorless transparent wall 36 defining the passage 35.

Thus, colored extraneous matter is detectable by the sensor 34 while the raw cotton is at rest. This achieves precision detection.

For the intermittent transport of raw cotton, the outlet of the passage 35 needs to be opened and closed with a high frequency (of at least 90 to 100 times per minute). For this purpose, the outlet is continually opened and closed by rotating the shutoff valve 33 about an axis in one direction. This results in diminished vibration and serves to preclude the damage to the shutoff valve 33 itself.

The raw cotton will accumulate at the inlet of the passage 35, thereby enclosing extraneous matter in the cotton accumulation to make the matter difficult to detect. Accordingly, the accumulation of raw cotton is loosened and separated by the projections 44 on the outer periphery of the rotary member 32. Since the length of the rotary member 32 is made approximately equal to the transverse width of the passage 35 which is transversely elongated and flat when seen from above, the separated cotton is uniformly spread out lengthwise of the rotary member 32, i.e. over the large transverse width of the passage 35, by the air stream. The extraneous matter in the raw cotton can be detected reliably since the sensor 34 is opposed to the transverse wall 36 of the passage 35 which is colorless and transparent.

Unless the other transverse wall 37 opposed to the transparent colorless wall 36 and defining the passage 35 is colorless and transparent, the raw cotton will cast its shadow on the wall 37, and the sensor 34 is likely to detect the shadow as colored extraneous matter in error. Accordingly, the other wall 37 is made colorless and transparent to eliminate the shadow. Furthermore, the wall 38 of the same color as raw cotton is provided as opposed to the wall 37 at a spacing therefrom, whereby the sensor 34 is adapted to detect only the extraneous matter in the raw cotton.

When a pair of sensors 34 is provided on opposite sides of the passage 35, the extraneous matter in the raw cotton is detectable from two directions with improved accuracy.

While the sensor 34 is adapted to detect the extraneous matter in the raw cotton based on the color difference therebetween, a sensor can be additionally provided for detecting extraneous matter based on the characteristics thereof other than the color. For example, sensors utilizing ultrasonic waves, X-rays, infrared rays or laser can be used in combination with the sensor 34.

When the outlet of the passage 35 is closed with the shutoff valve 33, the air stream flows from the duct 49 into the other duct 50, so that the raw cotton is transported at all times. This achieves improved productivity.

The drawings show an embodiment of the invention.
Fig. 1 is a side elevation in section showing a separator, detecting apparatus, passage change-over device and collector;
Fig. 2 is a view in section along the line A-A in Fig. 1;
Fig. 3 is a view in section taken along the line B-B in Fig. 1;
Fig. 4 is a rear view of the collector;
Fig. 5 is a cross sctional view of a feed roller;
Fig. 6 is a longitudinal sectional view of the same;
Fig. 7 is a cross sectional view of a separating roller;
Fig. 8 is a longitudinal sectional view of the same;
Fig. 9 is a cross sectional view of a rotary member;
Fig. 10 is a longitudinal sectional view of the same; and
Fig. 11 is a block diagram of part of the opening and picking step in a cotton yarn spinning process.

3...detecting apparatus, 32...rotary member, 33... shutoff valve, 34...sensor, 35...passage, 36...wall portion, 37...wall portion, 38...wall, 44...projection.

An embodiment of the invention will be described below with reference to the drawings.

Fig. 11 is a block diagram showing part of the opening and picking step of a cotton yarn spinning process, more specifically, an opener 1 for separating raw cotton into wads, a separator 2 for loosening and separating the wads of raw cotton into fibers, an apparatus 3 for detecting extraneous matter in the separated raw cotton, i.e., fragments of cloth, colored cotton fibers, seeds and the like which are different in color from the raw cotton, and a passage change-over device 4 for selectively connecting the passage for the raw cotton to a collector 5 or the subsequent step 6. The portions of raw cotton containing colored extraneous matter are collected in the collector 5, and the other portion of raw cotton free from extaneous matter is returned to the line again and then fed to the subsequent step 6 by a stream of air.

The opener 1, separator 2, detecting apparatus 3, change-over device 4, collector 5 and the subsequent step 6 are interconnected by a duct, which provides a passage for transporting the raw cotton with an air stream.

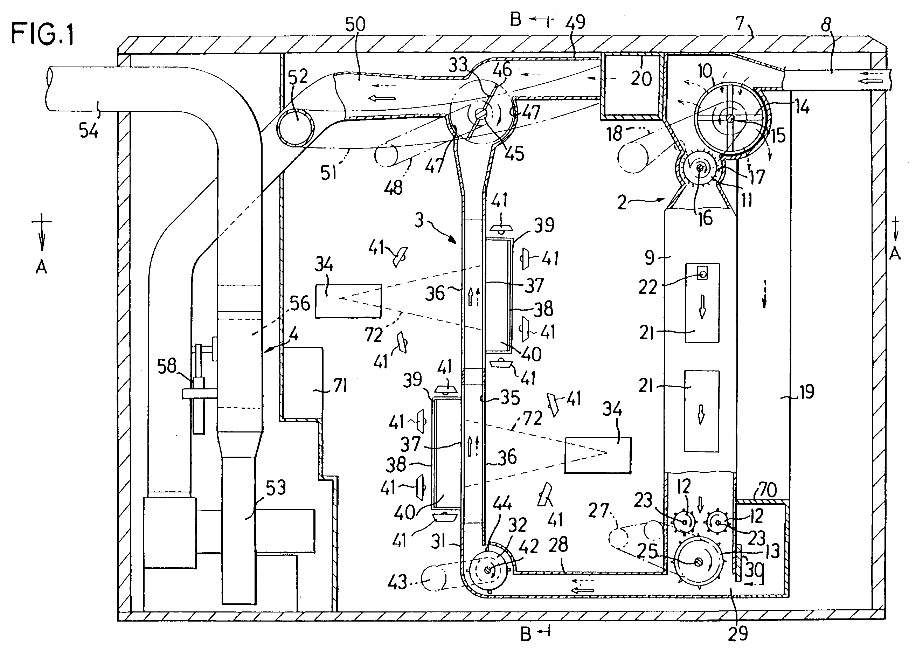

The separator 2, detecting apparatus 3, passage change-over device 4 and collector 5 are accommodated in a closed housing 7. Figs. 1 to 4 show the interior of the housing 7. A first duct 8 connecting the opener 1 to the separator 2 has an outlet which is positioned at the right upper portion of the housing 7 in Fig. 1.

The separator 2 comprises a vertical second duct 9, a tubular net 10 and a rotary scraper 11 which are positioned at an inlet of the second duct 9 at its upper end, a pair of feed rollers 12 and a separating roller 13 which are positioned at an outlet of the second duct 9 at its lower end, and a pair of vertical third ducts 19.

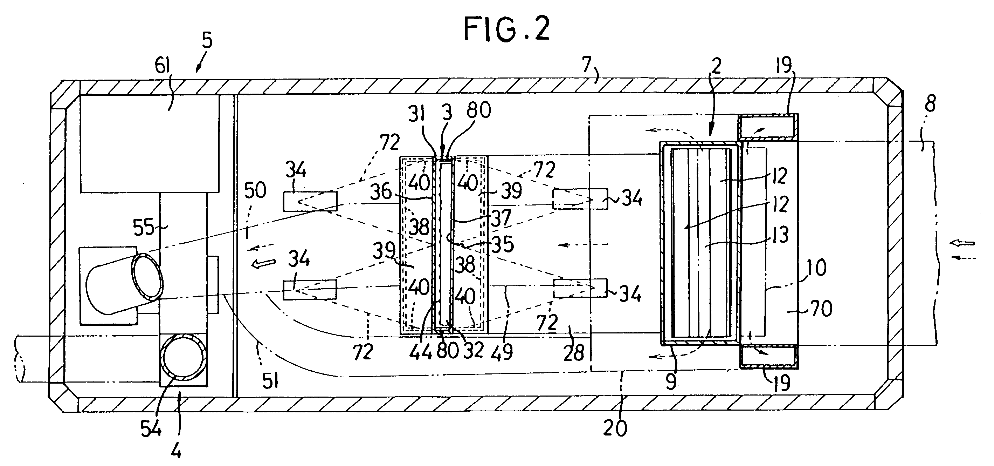

With reference to Fig. 2, the second duct 9 has a rectangular cross section elongated transversely of the housing 7 and communicates through the inlet at its upper end with the outlet of the first duct 8, permitting the wads of raw cotton forwarded through the first duct 8 by the air stream to reach the tubular net 10. In Figs. 1 and 2, the flow of raw cotton is indicated by blank arrows, and the flow of air by dotted-line arrows.

The tubular net 10 has a length approximately equal to the transverse width of the second duct 9 and is attached by ribs 14 to a rotary shaft 15, which is supported by the second duct 9. The rotary scraper 11 is positioned below and close to the tubular net 10. A rotary shaft 16 having the scraper 11 attached thereto is supported by the second duct 9. The rotary shaft 15 of the tubular net 10 and the rotary shaft 16 of the scraper 11 are drivingly rotated each in the direction of arrow shown in Fig. 1 by a wrapping connector drive mechanism 18. The air stream reaching the tubular net 10 via the first duct 8 flows into the net 10 through the meshes thereof, whereby the raw cotton reaching the net 10 through the first duct 8 is held to the outer periphery of the net 10. The raw cotton held to the periphery of the net 10 is scraped off by a multiplicity of claws 17 on the outer periphery of the rotary scraper 11, whereupon the cotton falls through the second duct 9. To inspect the falling raw cotton, the second duct 9 has inspection windows 21 and a photoelectric sensor 22. When the raw cotton has accumulated inside the second duct 9 to the level of the photoelectric sensor 22, the supply of raw cotton from the first duct 8 is discontinued in response to a signal from the sensor 22.

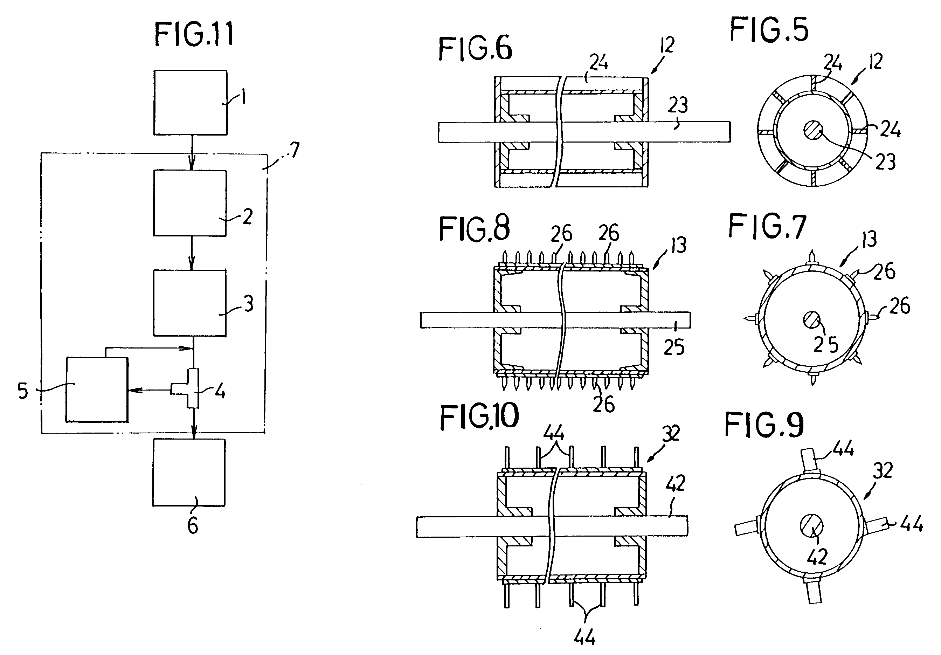

The pair of feed rollers 12 at the outlet of the second duct 9 are mounted on respective rotary shafts 23 supported by the second duct 9 and have a length approximately equal to the transverse width of the second duct 9. As seen in Figs. 5 and 6, each feed roller 12 has a plurality of feed plates 24 attached to its outer periphery.

The separating roller 13 is disposed below the pair of feed rollers 12 in the vicinity thereof. The separating roller 13 is mounted on a rotary shaft 25 which is supported by the second duct 9. The separating roller 13 has a length approximately equal to the transverse width of the second duct and is provided on its outer periphery with a multiplicity of projections 26 each having a sharp end.

The rotary shaft 23 of the feed rollers 12 and the rotary shaft 25 of the separating roller 13 are drivingly rotated by a wrapping connector drive mechanism 27, each in the direction of arrow shown in Fig. 1. The raw cotton falling through the second duct 9 is fed to the periphery of the separating roller 13 by the pair of feed rollers 12, loosened and separated by the projections 26 of the roller 13, and thereafter sent to the outlet of the second duct 9 at its lower end.

With reference to Fig. 2, one of the pair of third ducts 19 is connected at its upper end to the second duct 9 at the position of one end of the net 10. The other third duct 19 is connected at its upper end to the second duct 9 at the position of the other end of the net 10. The lower ends of the third ducts 19 are connected to a connecting duct 70, which is attached to the lower end of the second duct 9 in communication therewith through an opening 29. Accordingly, the air stream flowing through the first duct 8 to the inlet of the second duct 9 enters the tubular net 10, is thereby separated from the raw cotton, flows out from opposite ends of the tubular net 10 into the third ducts 19, passes through the connecting duct 70 and the opening 29 and reaches the lower end of the second duct 9 to join again with the cotton falling through the second duct 9. The size of the opening 29 is adjustable by a shutter 30, whereby the speed of transport of the raw cotton is adjustable.

A connecting duct 20 is attached to the upper end of the second duct 9 at the position where the ends of the tubular net 10 are located. Accordingly, the air stream entering the tubular net 10 flows into the third ducts 19 as stated above and also into the connecting duct 20.

The raw cotton is transported by the air stream further through a fourth duct 28 joined to the lower end of the second duct 9 and reaches the detecting apparatus 3.

The detecting apparatus 3 comprises a fifth duct 31 which extends vertically, a rotary member 32 positioned at a lower-end inlet of the fifth duct 31, a shutoff valve 33 positioned at the upper-end outlet of the fifth duct 31, and sensors 34 arranged at opposite sides of the fifth duct 31. The interior of the fifth duct 31 serves as a passage 35 for intermittently transporting the raw cotton upward therethrough.

As seen in Fig. 2, the passage 35 has a rectangular cross section elongated transversely of the housing 7. Each sensor 34 is opposed to a transverse wall portion 36 defining the passage 35. For the sensor 34 to detect the extraneous matter in the raw cotton transported through the passage 35, the wall portion 36 is made of a colorless transparent material. According to the present embodiment, two sensors 34 are arranged on each of the right and left sides of the passage 35 in Fig. 1, and the right sensors 34 are at a lower level than the left sensors 34. Accordingly, upper and lower two wall portions 36 are opposed to the sensors 34, and the upper wall portion 36 is positioned leftward from the lower wall portion 36 in Fig. 1. With the present embodiment, the wall portion 36 is made of acrylic resin. The sensor 34 is adapted to detect light which is different from raw cotton in color, and is a known one comprising a C.C.D camera or the like. Each detection zone is indicated in a broken line 72 in Figs. 1 and 2. The sensors 34 may be used in combination with other sensors utilizing ultrasonic waves, X-rays, infrared rays, laser beam or the like.

The other transverse wall portion 37 defining the passage 35 and opposed to the colorless transparent wall portion 36 is also made of acrylic resin and thereby rendered colorless and transparent. This eliminates the likelihood that shadows of raw cotton will be cast on the wall portion 37. A wall 38 of the same color as raw cotton is disposed as opposed to and spaced apart from the wall portion 37. The wall 38 is supported by a support frame 39 on the fifth duct 31. Thus, the sensor 34 is adapted to detect only the extraneous matter in the raw cotton. With the present embodiment, side walls 40 are arranged between the wall portion 37 and the wall 38 at their opposite ends, as opposed to each other transversely of the housing 7. These side walls 40 are also supported by the frame 39 on the fifth duct 31. With the present embodiment, the support frame 39 is in the form of a box, is made of colorless transparent acrylic resin and has the wall 38 and the side walls 40 attached to its inner surface. The wall 38 and the side walls 40 are of the same color as raw cotton and semitransparent. Semitransparent walls 80 of the same color as raw cotton are also provided at the transversely opposed sides of the passage 35.

Many fluorescent lamps 41 are arranged around each wall portion 36 for illuminating the raw cotton transported inside the wall portion 36. Fluorescent lamps 41 are also arranged above, below and in the rear of each support frame 39 so as to eliminate shadows of raw cotton. A cooler 71 is provided to prevent the rise of internal temperature of the housing 7 due to the multiplicity of fluorescent lamps 41.

The rotary member 32 at the lower-end inlet of the passage 35 is mounted on a rotary shaft 42, which is supported by the fifth duct 31 and drivingly rotated by a wrapping connector drive mechanism 43. As shown in Figs. 9 and 10, the rotary member 32 has many projections 44 each in the form of a rectangular plate and attached to its outer periphery. The projections 44 are arranged at an angular spacing of 90 degrees circumferentially of the member 32 and at a specified spacing axially thereof. The clearance between the outer end of each projection 44 and the inner surface of the fifth duct 31 is small. The rotary member 32 has a length approximately equal to the transverse width of the passage 35. Accordingly, even if the raw cotton forwarded through the fourth duct 28 by the air stream accumulates at the inlet of the passage 35, the accumulation is loosened and separated by the projections 44 on the rotary member 32 in rotation, preventing extraneous matter from being enclosed in the raw cotton. The air stream flows widthwise of the passage 35 (transversely of the housing) upon striking against the rotary member 32, whereby the raw cotton is also caused to flow widthwise of the passage 35 and uniformly spread out over the entire transverse width of the passage 35 which is elongated transversely of the housing 7. The raw cotton is transported, as uniformly spread out, upward through the passage 35.

The shutoff valve 33 at the upper-end outlet of the passage 35 consists essentially of a rotary shaft 45 and two rectangular plates 46 attached to the shaft 45. The shaft 45 is supported by the fifth duct 31 and is drivingly rotated by a wrapping connector drive mechanism 48 in one direction. The fifth duct 31 has a circular-arc inner surface 47 at the upper end of the passage 35. When the outer end of the plate 46 is opposed to the circular-arc surface 47 with a small clearance formed therebetween, the upper-end outlet of the passage 35 is substantially closed. Thus, when the valve 33 is rotated, the outer end of each plate 46 is repeatedly brought into and out of opposed relation with the circular-arc surface 47 to continually open and close the outlet of the passage 35, whereby the raw cotton is intermittently transported through the passage 35. When the raw cotton is at rest, extraneous colored matter is detected by the sensors 34. With the present embodiment, the outlet is opened and closed about 90 to about 100 times per minute, whereby the raw cotton is intermittently transported through the passage 35 a distance of tens of centimeters at a time. This distance is smaller than the range of detection by the sensor 34.

The upper end of the fifth duct 31 is connected to both a sixth duct 49 and a seventh duct 50. The sixth duct 49 is connected to the connecting duct 20, with the result that the air stream entering the tubular net 10 from the first duct 8 partly flows through the connecting duct 20 into the sixth duct 49, from which the air flows into the seventh duct 50. The junction of the sixth and seventh ducts 49 and 50 is continually opened and closed by the shuftoff valve 33. Stated more specifically, while opening the outlet of the passage 35, the valve 33 holds the sixth duct 49 out of communication with the seventh duct 50 and the outlet of the passage 35 and permits the outlet to communicate with the seventh duct 50. While closing the outlet of the passage 35, the valve 33 permits the sixth duct 49 to communicate with the seventh duct 50. Thus, even when the passage 35 is closed with the valve 33, the air stream from the first duct 8 incessantly flows into the tubular net 10, causing the raw cotton to be held to the outer periphery of the net 10 at all times. Further the raw cotton is transported through the seventh duct 50 by the air stream at all times.

The seventh duct 50 is connected to the connecting duct 20 by an auxiliary duct 51. The junction of the seventh duct 50 and the auxiliary duct 51 is openable by a shutter 52. In the case where the capacity of the air supply source at the spinning factory is excessively great, the shutter 52 is opened, whereby the air stream from the first duct 8 is allowed to partly flow into the seventh duct 50 at all times. This prevents the speed of transport of the raw cotton through the passage 35 from exceeding the required value.

The seventh duct 50 is connected to the passage change-over device 4 with a blower 53 provided therebetween. The change-over device 4 is connected to an eighth duct 54 and a ninth duct 55. The eighth duct 54 is connected to means for the subsequent step 6, and the ninth duct 55 to the collector 5.

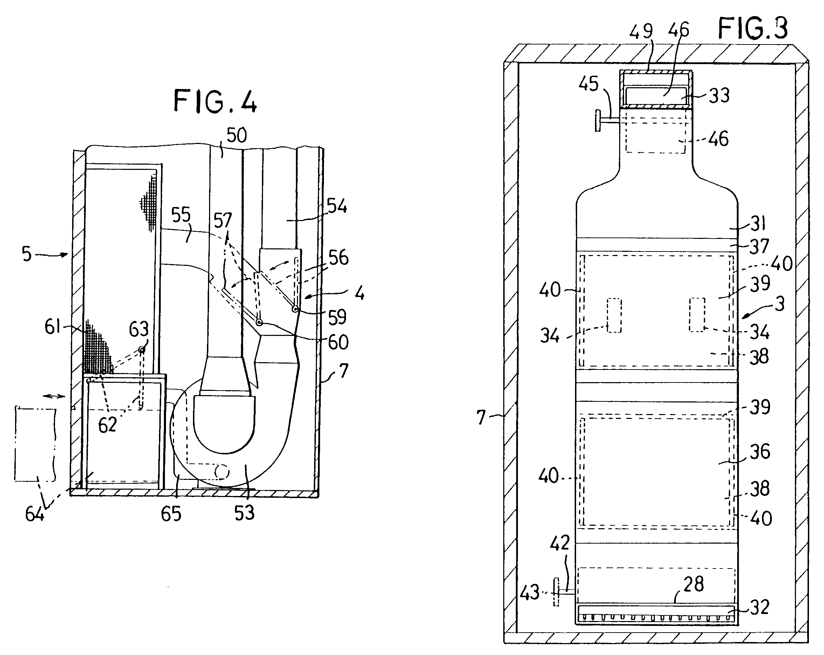

With reference to Fig. 4, the passage change-over device 4 has a damper 56 for opening or closing the passage from the seventh duct 50 to the eighth duct 54, and a damper 57 for opening or closing the passage from the seventh duct 50 to the ninth duct 55. The damper 56 is movable about a pivot 59, and the damper 57 about a pivot 60. When the damper 56 is open, the damper 57 is closed as indicated in broken lines in Fig. 4. When the damper 56 is closed, the damper 57 is open as indicated in phantom lines. The dampers 56 and 57 are thus opened and closed by a hydraulic cylinder 58, which operates in response to signals from the sensors 34. The damper 57 is opened and the damper 56 closed with such timing that upon the sensor 34 detecting extraneous matter in the raw cotton, the raw cotton portion containing the extraneous matter will be collected in the collector 5.

The collector 5 comprises a collecting box 61 connected to the ninth duct 55, a damper 62 for opening or closing a bottom opening of the collecting box 61, and a withdrawable box 64 under the box 61. The collecting box 61 has a wall of fine meshwork for releasing air therethrough. The damper 62 is movable about a pivot 63. When the bottom opening of the collecting box 61 is opened, the raw cotton collected in the box 61 falls into the withdrawable box 64, which is slidable. The box 64, as positioned inside the housing 7 as indicated in solid line in Fig. 4, can be withdrawn from the housing 7 as indicated in phantom line. The raw cotton portion containing the extraneous matter is taken out from the withdrawn box 64. The portion of the collector 5 below the collecting box 61 is connected to the seventh duct 50 by a return duct 65, and the junction of the return duct 65 and the collector 5 is openable by an unillustrated shutter. If the raw cotton in the withdrawable box 64 is free from extraneous matter, the raw cotton portion can be returned to the seventh duct 50 via the return duct 65, whereby waste of raw cotton can be obviated.

With the construction described above, raw cotton is carried through the first duct 8 to the separator 2 by a stream of air and held drawn to the outer periphery of the tubular net 10. The cotton held to the outer periphery of the tubular net 10 is scraped off by the rotary scraper 11, falls through the second duct 9, and is fed by the feed rollers 12 to the separating roller 13 and loosened and separated by the roller 13. The air stream flowing out from the first duct 8 into the tubular net 10 partly flows through the third ducts 19 and joins with the raw cotton again at the outlet of the second duct 9.

The raw cotton then flows through the fourth duct 28, reaches the detecting apparatus 3 and accumulates at the inlet of the apparatus 3. The accumulation of raw cotton is loosened and separated by the rotary member 32 and uniformly spread out widthwise of the passage 35 of increased transverse width. The raw cotton as uniformly spread out is intermittently transported upward through the passage 35. During this transport, the extraneous matter in the raw cotton is detected by the sensors 34. The detecting operation is effected while the raw cotton is at rest. No shadow of the raw cotton is cast on the wall portions 37, while the sensors 34 are adapted to detect the extraneous matter only. For these reasons, the extraneous matter is detectable with high accuracy. Since the raw cottin is uniformly spread out widthwise of the passage 35 of increased transverse width, the extraneous matter is detectable by the sensors 34 without failure. The senors 34 are arranged on opposite sides of the passage 35 for detecting the extraneous matter from two directions. This assures precision detection.

The shutoff valve 33 rotates in one direction and is therefore less likely to vibrate and less prone to damage than those of the reciprocating type.

The air stream reaching the separator 2 via the first duct 8 and flowing into the tubular net 10 partly flows into the seventh duct 50, so that even when the air stream through the passage 35 is halted, air flows into the tubular net 10 at all times, whereby the raw cotton can be held drawn to the net 10 at all times. The raw cotton is always transported through the seventh duct 50.

The speed of raw cotton is adjustable by adjusting the size of the opening 29 or opening or closing the shutter 52, so that the raw cotton can be intermittently transported through the passage 35 in a suitable quantity at a time for the sensors 34 to detect extraneous matter properly.

In response to the extraneous matter detecting signal from the sensors 34, the dampers 56 and 57 of the passage change-over device 4 are operated to collect the raw cotton portion containing extraneous matter in the collector 5. The collector 5 is connected to the seventh duct 50 by the return duct 65, so that if a raw cotton portion free from extraneous matter is collected, this portion can be returned to the seventh duct 50.

## Claims

1. An apparatus for detecting extraneous matter in raw cotton, comprising:
- a passage (35) for transporting the raw cotton upward from a low position therethrough by an air-stream, said passage (35) being defined by a duct (31) comprising a wall (36) made of a colorless transparent material;
- a sensor (34) disposed outside the passage (35) for detecting extraneous matter different from the raw cotton in color, said sensor (34) being positioned as opposed to said wall (36); and
- a shut-off valve (33) for continually opening and closing an outlet of the passage (35) to intermittently transport the raw cotton through the passage (35),
**characterized** in that said shut-off valve (33) comprises a valve member (46) which is driven to rotate about an axis in only one direction.

2. An apparatus according to claim 1, **characterized** in that said passage (35) has a flat cross section elongated transversely of the apparatus when seen from above, that said wall is a transverse wall (36) of the duct (31) and that a rotary member (32) is disposed at an inlet of the passage (35) and is rotatable about an axis parallel to the transverse wall (36), said rotary member (32) being provided with a plurality of projections (44) projecting from its outer periphery for loosening and separating the raw cotton, and said rotary member (32) having a length approximately equal to the transverse width of the passage (35) so as to spread out the raw cotton uniformly over the entire transverse width of the passage (35).

3. An apparatus according to claim 1 or 2, **characterized** in that the passage (35) has a flat cross section elongated transversely of the apparatus when seen from above, that said wall is one of a pair of opposed transverse walls (36,37) of the duct (31), the other transverse wall (37) being also made of a colorless transparent material, and that a wall (38) has the same color as the raw cotton and is opposed to and space apart from said other transverse wall (37) from said other transverse wall (37).

4. An apparatus according to one of claims 1 to 3, **characterized** in that at least one pair of sensors (34) is provided on opposite sides of the passage (35).

5. An apparatus according to one of the preceding claims, **characterized** by a sensor for detecting extraneous matter in the raw cotton based on the characteristics of the extraneous matter other than the color thereof.

6. An apparatus according to one of the preceding claims, **characterized** in that a pair of ducts (49,50) is in communication with the outlet of the passage (35), one duct (49) being in communication with the inlet of the passage (35) and the other duct (50) communicating with means (6) for the subsequent raw cotton treating process, the shut-off valve (33) being operable to hold the one duct (49) out of communication with the outlet of the passage (35) and the other duct (50) and to permit the outlet of the passage (35) to communicate with the other duct (50) while opening the outlet of the passage (35), and further being operable to permit the one duct (49) to communicate with the other duct (50) while closing the outlet of the passage (35).

## Patentansprüche

1. Vorrichtung zum Ermitteln von Fremdteilen in Rohbaumwolle, mit
- einem Kanal (35) zum Transportieren der Rohbaumwolle in Aufwärtsrichtung von einer unteren Position durch den Kanal mit Hilfe eines Luftstroms, welcher Kanal (35) durch eine Leitung (31) gebildet ist, die eine Wand (36) aus farblosen,, durchsichtigem Material aufweist;
- einem Sensor (34) außerhalb des Kanals (35) zur Ermittlung von Fremdteilen, die sich von der Rohbaumwolle in der Farbe unterscheiden, welcher Sensor (34) der Wand (36) gegenüber angeordnet ist; und
- einem Schließventil (33) zum ständigen Öffnen und Schließen eines Auslasses des Kanals (35) zum intermittierenden Transport der Rohbaumwolle durch den Kanal (35).
dadurch **gekennzeichnet**, daß das Schließventil (36) ein Ventilglied (46) umfaßt, das zur Drehung in nur eine Richtung um eine Achse angetrieben wird.

2. Vorrichtung nach Anspruch 1, dadurch **gekennzeichnet**, daß der Kanal (35) einen flachen, in Draufsicht quer zur Vorrichtung langgestreckten Querschnitt aufweist, daß die Wand eine Querwand (36) der Leitung (31) ist und daß ein drehbares Bauteil (32) in einem Einlaß des Kanals (35) angeordnet und um eine Achse parallel zu der Querwand (36) drehbar ist, welches drehbare Bauteil (32) mit einer Anzahl von Vorsprüngen (44) versehen ist, die von dessen äußerem Umfang vorspringen und die Rohbaumwolle lockern und trennen, und daß das drehbare Bauteil (32) eine Länge aufweist, die etwa gleich der Breite des Kanals (35) in Querrichtung ist, so daß die Rohbaumwolle gleichförmig über die gesamte quergerichtete Breite des Kanals (35) verteilt wird.

3. Vorrichtung nach Anspruch 1 oder 2, dadurch **gekennzeichnet**, daß der Kanal (35) einen flachen, in Querrichtung der Vorrichtung in Draufsicht langgestreckten Querschnitt aufweist, daß die Wand eine von zwei gegenüberliegenden, quergerichteten Wänden (36,37) der Leitung (31) ist, daß die andere, quergerichtete Wand (37) ebenfalls aus einem farblosem, durchsichtigen Material besteht, und daß eine Wand (38) dieselbe Farbe wie die Rohbaumwolle aufweist und der anderen, quergerichteten Wand (37) gegenüber und in Abstand zu dieser liegt.

4. Vorrichtung nach einem der Ansprüche 1 bis 3, dadurch **gekennzeichnet**, daß wenigstens ein Paar von Sensoren (34) auf gegenüberliegenden Seiten des Kanals (35) vorgesehen ist.

5. Vorrichtung nach einem der vorhergehenden Ansprüche, **gekennzeichnet** durch einen Sensor zur Ermittlung von Fremdteilen in der Rohbaumwolle auf der Basis der Charakteristika der Fremdteile außer deren Farbe.

6. Vorrichtung nach einem der vorhergehenden Ansprüche, dadurch **gekennzeichnet**, daß ein paar von Leitungen (49,50) mit dem Auslaß des Kanals (35) verbunden ist, daß eine Leitung (49) in Verbindung mit dem Einlaß des Kanals (35) und die andere Leitung (50) in Verbindung mit einer Einrichtung (6) für den anschließenden Behandlungsprozeß der Rohbaumwolle steht, daß das Schließventil (33) derart betätigbar ist, daß es die eine Leitung (49) von dem Auslaß des Kanals (35) und der anderen Leitung (50) trennt und den Auslaß des Kanals (35) mit der anderen Leitung (50) verbindet, während er den Auslaß des Kanals (35) öffnet, und ferner derart betätigbar ist, daß es eine Verbindung der einen Leitung (49) mit der anderen Leitung (50) gestattet, während der Auslaß des Kanals (35) geschlossen wird.

## Revendications

1. Appareil de détection de corps étrangers dans du coton brut, comprenant :
un passage (35) pour y déplacer, à l'aide d'un courant d'air, le coton brut vers le haut à partir d'une position basse, ledit passage (35) étant défini par une conduite (31) comprenant une paroi (36) faite d'une matière incolore transparente ;
un capteur (34) disposé à l'extérieur du passage (35) pour détecter des corps étrangers d'une couleur différente de celle du coton brut, ledit capteur (34) étant placé en face de ladite paroi (36) ; et
un obturateur d'arrêt (33) pour ouvrir et fermer continuellement un orifice de sortie du passage (35) pour déplacer de manière intermittente le coton brut dans le passage (35) ;
caractérisé en ce que l'obturateur d'arrêt (33) comprend un élément obturateur (46) qui est entraîné de façon à tourner, dans un seul sens, autour d'un axe.

2. Appareil selon la revendication 1, caractérisé en ce que ledit passage (35) a, vu de dessus, une section transversale plate allongée transversalement par rapport à l'appareil, en ce que ladite paroi est une paroi transversale (36) de la conduite (31), et en ce qu'un élément rotatif (32) est disposé au droit d'un orifice d'entrée du passage (35) et est mobile en rotation autour d'un axe parallèle à la paroi transversale (36), ledit élément rotatif (32) étant pourvu d'un certain nombre de saillies (44) dépassant de sa périphérie extérieure pour desserrer et diviser le coton brut, et ledit élément rotatif (32) ayant une longueur approximativement égale à la largeur transversale du passage (35) de manière à étaler le coton brut uniformément sur toute la largeur transversale du passage (35).

3. Appareil selon la revendication 1 ou 2, caractérisé en ce que ledit passage (35) a, vu de dessus, une section transversale plate allongée transversalement par rapport à l'appareil, en ce que ladite paroi est l'une d'une paire de parois transversales opposées (36, 37) de la conduite (31), l'autre paroi transversale (37) étant également faite d'une matière incolore transparente, et en ce qu'une paroi (38) est de la même couleur que le coton brut et est située en face de ladite autre paroi transversale (37) et est écartée de celle-ci.

4. Appareil selon l'une des revendications 1 à 3, caractérisé en ce qu'au moins une paire de capteurs (34) est placée de chaque côté du passage (35).

5. Appareil selon l'une quelconque des revendications précédentes, caractérisé par un capteur pour détecter les corps étrangers dans le coton brut en se basant sur des caractéristiques des corps étrangers autres que leur couleur.

6. Appareil selon l'une quelconque des revendications précédentes, caractérisé en ce qu'une paire de conduites (49, 50) est en communication avec l'orifice de sortie du passage (35), une conduite (49) étant en communication avec l'orifice du passage (35) et l'autre conduite (50) communiquant avec un moyen (6) pour le traitement ultérieur du coton brut, l'obturateur d'arrêt (33) servant à maintenir la première conduite (49) hors de communication avec l'orifice de sortie du passage (35) et l'autre conduite (50), et à permettre à l'orifice de sortie (35) de communiquer avec l'autre conduite (50) pendant l'ouverture de l'orifice de sortie du passage (35), et servant en outre à permettre à la première conduite (49) de communiquer avec l'autre conduite (50) pendant la fermeture de l'orifice de sortie du passage (35).
